# EUROPEAN PATENT APPLICATION

(11) **EP 2 015 297 A2**
(43) Date of publication of application: **14.01.2009**
(21) Application number: 07109808.1
(22) Date of filing: 07.06.2007
(51) Int. Cl.: G11B 7/085, G11B 7/095

(54) **Actuator means with a swivel arm arrangement for accessing moving storage media and disk drive unit comprising a respective actuator means**

(71) Applicant: Deutsche Thomson OHG, 30625 Hannover (DE)
(72) Inventor: Bammert, Michael, 78739 Hardt (DE); Suzuki, Tsuneo, 78087 Mönchweiler (DE); Dupper, Rolf, 78050 Villingen-Schwenningen (DE)
(74) Representative: Arnold, Klaus-Peter

(57) **Abstract**

Actuator means with a swivel arm arrangement and a pickup unit for accessing moving storage media and respective disk drive unit

An actuator means for accessing moving storage media (D), which carries substantially parallel information tracks (T), has a carrier (C) and a swivel arm arrangement (A). The swivel arm arrangement (A) has a first lever (L1) and a second lever (L2), the first lever (L1) having a support part (3) and a pickup arm (4) carrying the pickup unit with an objective lens (2). The objective lens (2) is movable substantially in a tracking direction (X) and in a focus direction (Y). The support part (3) is pivotably mounted on the carrier (C) for the movements of the objective lens (3) substantially in the tracking direction (X). The pickup arm (4) is movable with reference to the support part (3) in the focus direction (Y). In addition, the second lever (L2) is provided with at least two tilt coils (17), and the carrier (C) is provided with two tilt magnets (18), for providing a tilt movement.

## Description

### BACKGROUND OF THE INVENTION

### FIELD OF THE INVENTION

The present invention relates to an actuator means with a swivel arm arrangement for accessing moving storage media, according to the preamble of claim 1. Respective actuator means are used in disk drive units as recording and/or reproducing apparatuses, e.g. in a DVD player and a DVD recorder.

### DESCRIPTION OF THE PRIOR ART

An actuator means for accessing moving storage media, carrying substantially parallel information tracks, records and/or reproduces information with respect to the moving storage media, namely a rotating disk, while moving in the radial direction of the disk. In the actuator means, typically one or more light beams are generated and focused onto a scanning spot of a track on a layer within the disk. Readout light beams coming from the disk are projected onto a photo detector, where they are converted into electrical signals for further evaluation.

An actuator means with a swivel arm arrangement for accessing moving storage media, namely an optical disk, referred to as an optical head, is described in EP 0 400 570 A2. In particular, the optical head houses an optical system for focusing an optical beam, i.e. a laser beam, onto the optical disk. The optical head has a double structure comprising a first head structure swung to carry out rough access, and a second head member housed in the first head structure and swung to carry out fine access. The first head structure is swung round shafts, which are supported by means of an carrier, where the first head structure is swung parallel to the optical disk. When the first head structure is swung, an objective lens located on the top of one end of the optical head is moved in the radial or track access direction of the optical disk. When the second head structure is swung, the focusing position of the laser beam is changed by the objective lens. The optical head needs a double structure in order to enable movements substantially in the tracking direction, i.e. in the radial direction of the disk parallel to the disk, and in the focus direction, i.e. orthogonal to the disk.

An actuator means with a swing arm which is pivotably arranged in a tracking direction and driven by a voice coil motor is described in US 20040148619. An optical pick-up is coupled via a leave spring fixed to the swing arm, and a magnet and a coil perform a focus control, a fine tracking control and a tilt control with regard to a respective track on an optical disc by deforming the leave spring. A swing arm arrangement which comprises also a tilt actuator in addition with a focus and a tracking actuator is described in JP 2004/265552

### SUMMARY OF THE INVENTION

It is desirable to improve an actuator means as described before, which enables movements in different directions.

The invention is as set out in claims 1 and 11. Advantageous developments of the invention are specified in the dependent claims.

An actuator means for accessing moving storage media, which carries substantially parallel information tracks, has a carrier and a swivel arm arrangement. The swivel arm arrangement is pivotably mounted on the carrier and turnable parallel to the media. The swivel arm arrangement has a pickup unit with an objective lens, which is movable substantially in a tracking direction and in a focus direction. The pickup unit comprises further optical means, e.g. a laser, mirrors, lenses and a detector, for reading from and writing data on the storage media.

According to the invention the swivel arm arrangement has a first lever with a support part and with a pickup arm, which has a section carrying the pickup unit with the objective lens. The support part is pivotably mounted on the carrier for movements of the objective lens substantially in the tracking direction. In addition, the pickup arm is movable in reference to the support part, substantially in the focus direction.

The pickup arm of the first lever, which is pivoted on the carrier, is movable around a first pivot axis orthogonal to the media, i.e. parallel to the media. As a result, its pickup arm with the objective lens can be moved substantially in the tracking direction. In addition, the pickup arm can be moved in reference to the support part. The mobility of the pickup arm with reference to the support part makes it possible, that the objective lens can be moved substantially in the focus direction.

The pickup arm is connected to the support part for example by a hinge. As an alternative, the pickup arm is flexible in the focus direction. Preferably, the pickup arm is made by a plastic element with a diminution, where the diminution extends parallel to the tracking direction and constitutes a second pivot axis for the movements of the outer section of the pickup arm in the focus direction. The second pivot axis has a certain distance to the first pivot axis.

The swivel arm arrangement has a magnetic driving portion with means with coils and with a magnet configuration. Preferably, the means with coils is constituted as a second lever, which is arranged below the first lever. The second lever comprises a coil arm carrying at least a tracking coil and a focus coil and a support arm connected to the pickup arm. The coils on the second lever cooperate with a magnet configuration on the carrier in order to drive the pickup arm with the lens, by transmitting moving forces to the pickup arm.

The second lever is provided in particular with at least two tilt coils, and the support part comprises a supporting bush, which has a certain clearance in the tracking direction. As a result, the swivel arm arrangement is able to accomplish a radial tilt movement. In addition, the first lever is turnable by means of the supporting bush mentioned above around a third pivot axis, which extends lengthwise through the first lever. The radial tilt movements of the first lever are initiated by the tilt coils of the second lever.

Preferably, the second lever comprises a centre section between the coil arm and the support arm, where the centre part carries the tracking coils.

Preferably, a disk drive unit comprises a respective actuator means.

The actuator means may be used for a small storage medium, e.g. for a so-called coin disk, with a short tracking way orthogonal to the information tracks. The movements of the objective lens in the tracking direction are used both for the access to a certain track and for the adjustment of the beam to the scanning spot of the track. As a result of the mobility of the objective lens not only in the tracking direction and the focus direction but also in the radial tilt direction, the actuator means can be used also for accessing hologram disks.

As an alternative, the actuator means are used for well-known larger media, e.g. DVDs. In this way, the actuator means as a whole, including the carrier and the swivel arm arrangement, is movable and is being moved in the tracking direction, so that all tracks on the media can be accessed, while the swivel arm arrangement only adjusts the beam onto the disk.

Accessing shall encompass reading access for reading information from the storage medium, or writing access for writing or recording information to the storage medium, or combinations of reading and writing access.

Possible forms of moving storage media are disks carrying concentric circular or spiral information tracks, with the access being of a reflective type where an access light beam is being generated and focused onto the information track and a reflected light beam, coming back from and being modulated by the information track, is being focused onto a photo detector arrangement and being evaluated. However, it is within the scope of this invention to be used on other forms of optical recording media having information tracks in layers, like those in card or tape form; and regardless whether the access principle is of a reflective or of a transductive type.

### BRIEF DESCRIPTION OF THE DRAWINGS

The invention will be explained in more detail using a preferred embodiment, illustrated in the figures.

In the Figures:
- Figure 1: shows a simplified perspective top view of an actuator means according to the invention,
- Figure 2: shows another simplified perspective top view of the actuator means of figure 1,

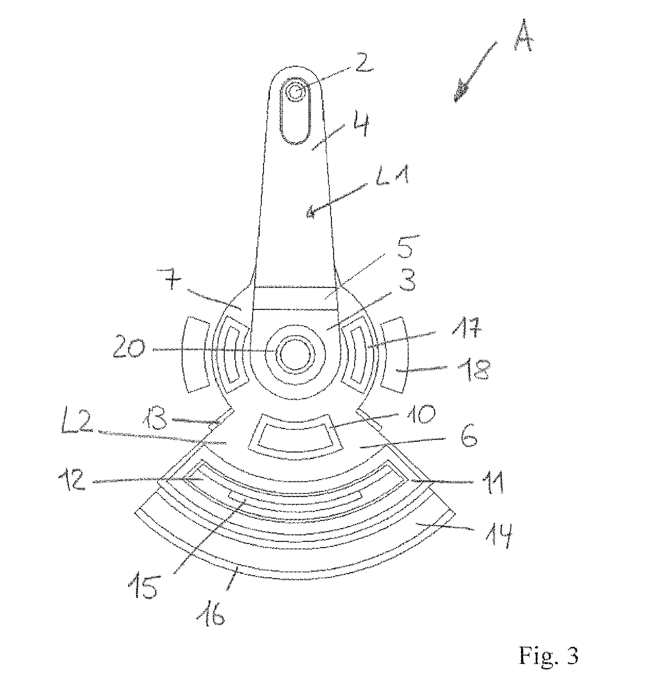

- Figure 3: shows a simplified top view of the actuator means of figure 1,
- Figure 4: shows a simplified perspective cross section parallel to a first pivot axis of the actuator means of figure 1,
- Figure 5: shows a simplified perspective view of the rear side of the actuator means of figure 1, and
- Figure 6: shows an enlarged detail of figure 5.

### DETAILED DESCRIPTION OF THE INVENTION

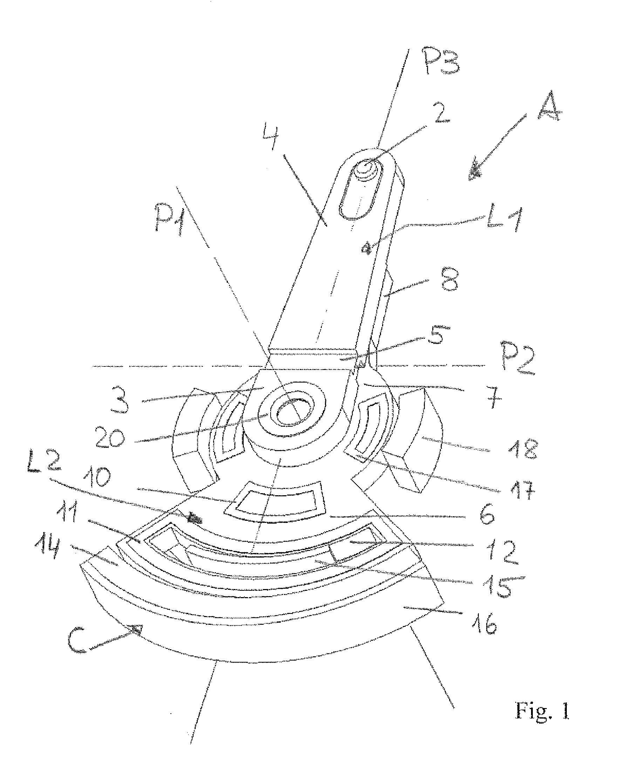

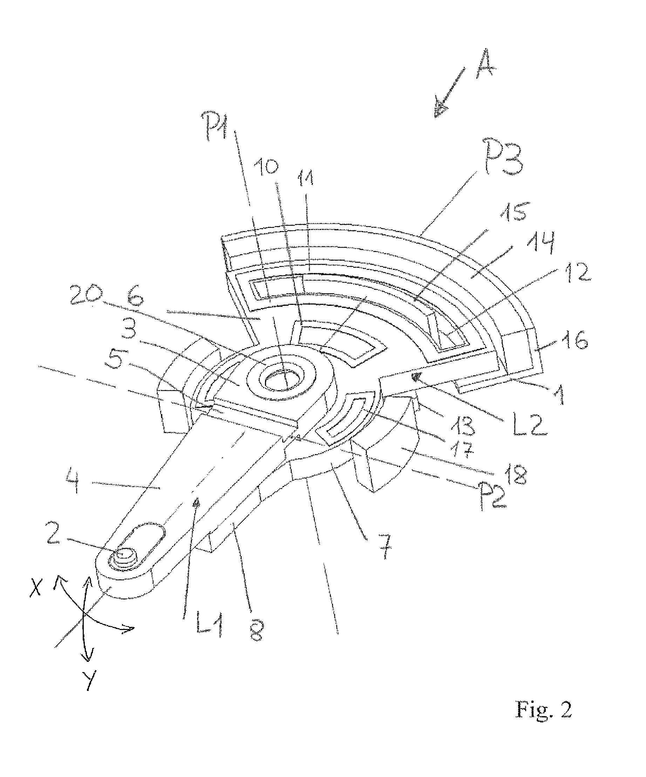

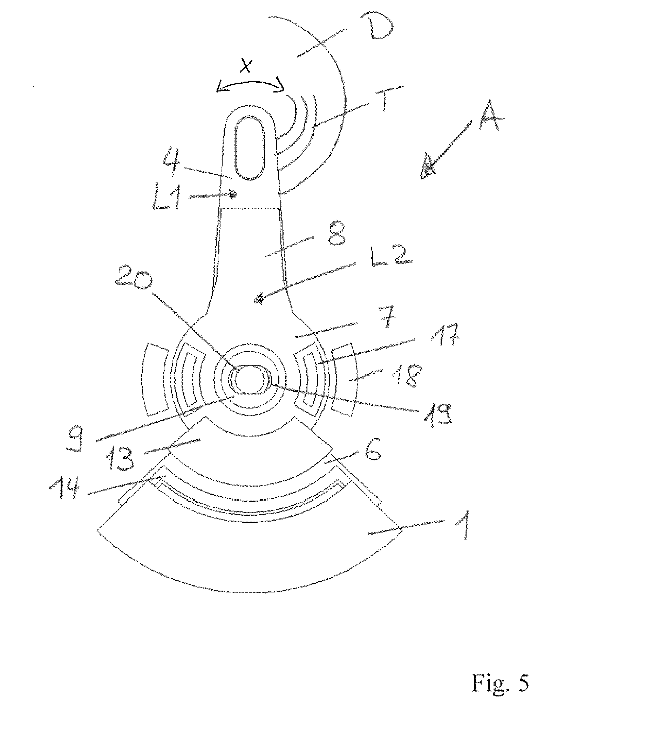

With reference to the figures, an actuator means for accessing moving storage media D, namely a disk, shown in figure 5, carrying substantially parallel information tracks T, has a carrier C and a swivel arm arrangement A, which is pivotably mounted on the carrier C, figures 1 and 2. In particular, the carrier C has a base 1 and a pivot pin, which projects from the base 1 along a first pivot axis P1, not shown in the figures. The swivel arm arrangement A is pivotably mounted onto the pivot pin of the carrier C. The swivel arm arrangement A has an optical means, in particular an optical pickup with a lens 2, which is movable substantially in a tracking direction X, in parallel with the surface of the media D, and substantially in a focus direction Y orthogonal to the media D, as shown in figure 2.

The swivel arm arrangement A has a first lever L1 with a support part 3 and with a pickup arm 4, carrying the objective lens 2 at its outer end. The support part 3 is pivotably mounted on the pivot pin, in a way that the objective lens 2 is movable substantially in the tracking direction X.

The objective lens 2 on the outer end of the pickup arm 4 is movable also with reference to the support part 3, substantially in the focus direction Y. The pickup arm 4 is flexible in the focus direction Y due to a joint 5, which can be for example a diminution, as shown, or a hinge.

The pickup arm 4 is made out of plastic material and is in this embodiment provided with a diminution as a joint 5 at its inner end. The pickup arm 4 passes into the support part 3 through the diminution 5, which divides the first lever L1 into the support part 3 and the pickup arm 4. The diminution 5 extends parallel to the tracking direction X and constitutes a second pivot axis P2 for the movements of the objective lens 2 on the outer end of the pickup arm 4, substantially in the focus direction Y, i.e. along an arc, which extends substantially in the focus direction Y. The second pivot axis P2 is arranged with a certain distance to the first pivot axis P1 in the direction of the objective lens 2. The diminution 5 has the shape of a double sided groove. The cross section of the pickup arm 4 parallel to the media D has in particular a small rectangular shape with a rounded outer end.

The swivel arm arrangement A has a second lever L2, which extends also in opposite direction with regard to the first lever L1 and the pivot axis P1. The second lever L2 comprises a coil arm 6, a centre part 7 and a support arm 8. The cross sector of the coil arm 6, parallel to the media D, is shaped as a circle sector with a sector angle of e.g. 90°. The coil arm 6 passes into the centre part 7 at its inner end. The cross section of the centre part 7 is ring-shaped. The centre part 7 has a centre opening 9 surrounding the pivot pin at a certain distance. The centre part 7 passes into the support arm 8 at the side opposite of the coil arm 6. The support arm 8 extends under the pickup arm 4 and is connected to the pickup arm 4. The support arm 8 is shorter than the pickup arm 4, where its outer end ends under the pickup arm 8 at a certain distance to the outer end of the pickup arm 4. In the region, in which the support arm 8 is arranged under the pickup arm 4, the cross section of the support arm 8 corresponds to that of the pickup arm 4.

The coil arm 6 of the second lever L2 carries two tracking coils 10 and two focus coils 11 in this embodiment. At both the top side and the bottom side of the coil arm 6, one focus coil 11 is arranged in a radial outer region of the coil arm 6 around an opening 12 of the coil arm 6, and one tracking coil 10 is arranged in a radial inner region of the coil arm 6. The opening 12 is arc-shaped and extends parallel to the outer end of the coil arm 6. The tracking coils 10 and the focus coils 11 can be arranged in particular as printed coils comprising several layers of windings for providing a sufficient magnetic field for the tracking and focus movements.

The swivel arm arrangement A comprises a magnet configuration, which comprises a tracking magnet 13, a focus magnet 14 and an inner yoke 15 for the focus magnet 14, as shown in figure 2. The focus magnet 14 is arranged on the base 1 in front of the outer end of the coil arm 6, is arc-shaped and extends parallel to the outer end of the coil arm 6. The focus magnet 14 is connected to a similar shaped carrier element 16, which projects from the base 1, at the side of the focus magnet 14, which is opposite to the coil arm 6.

The inner yoke 15, which is also arc-shaped, is arranged on the base 1 and projects in the opening 12 of the coil arm 6. The inner yoke 15 is arranged with set distances to the coil arm 6 in both directions along a circle around the first pivot axis P1. The distances enable the swivel arm arrangement A with the first lever L1 and the second lever L2 to be movable some degrees, in particular 5° to 30°, around the first pivot axis P1.

The tracking magnet 13 is arranged on the base 1 under the inner region of the coil arm 6. The tracking magnet 13 is of a circular shape, corresponding with the shape of the inner region of the coil arm 6 with the tracking coils 10.

The second lever L2 is provided also with at least two tilt coils 17. In particular, the centre part 7 carries four tilt coils 17 in this embodiment. The tilt coils 17 are arranged at both the top and the bottom of the second lever L2. Each coil 17 in particular is located in one of the outer regions of the centre part 7 between the coil arm 6 and the support arm 8, at opposite sides with regard to the first pivot axis P1, and in a direction in parallel with the second pivot axis P2, for providing a tilt movement around a third pivot axis P3, which crosses the first pivot axis P1 under an essentially rectangular angle.

The magnet configuration comprises two tilt magnets 18 facing the outer regions of the centre part 7 with the tilt coils 17. The tilt magnets 18 have a shape of an arc in this embodiment and extend in parallel to the centre part 7. They are arranged on the base 1, this part of the base 1 not being shown in the figures.

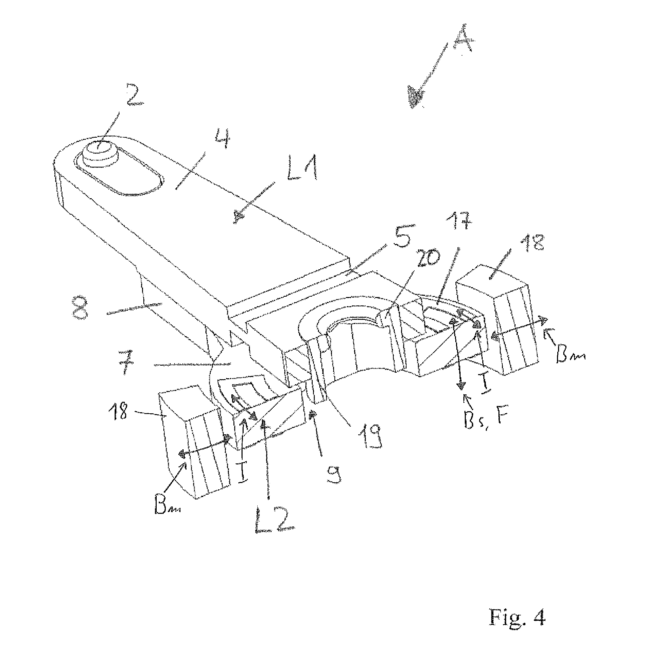

As shown in figure 4, the current I through the coils 17 flows in the plane of the centre part 7, which is essentially in parallel with the optical disc D. The magnetic field generated by the coils 17 intersects therefore the centre of the coils 17, in parallel with the pivot axis P1, and interacts with the magnetic field Bm of the magnets 18 being permanent magnets, which are closely arranged to the coils 17. The magnets 18 are arranged in particular such, that the magnetic field Bm is perpendicular to the first pivot axis P1, and in parallel with the second pivot axis P2.

For providing a tilt movement, the coils 17 on one side of the centre part 7 are provided with a current having the same amplitude, but the opposite polarity as provided for the coils 17 of the opposite side of the centre part 7. On one side therefore a force in the upward direction is generated and on the other side a force into the downward direction, which results in a tilt movement of the second lever L2 around the third pivot axis P3, and therefore also for the first lever L1 with the pickup arm 4.

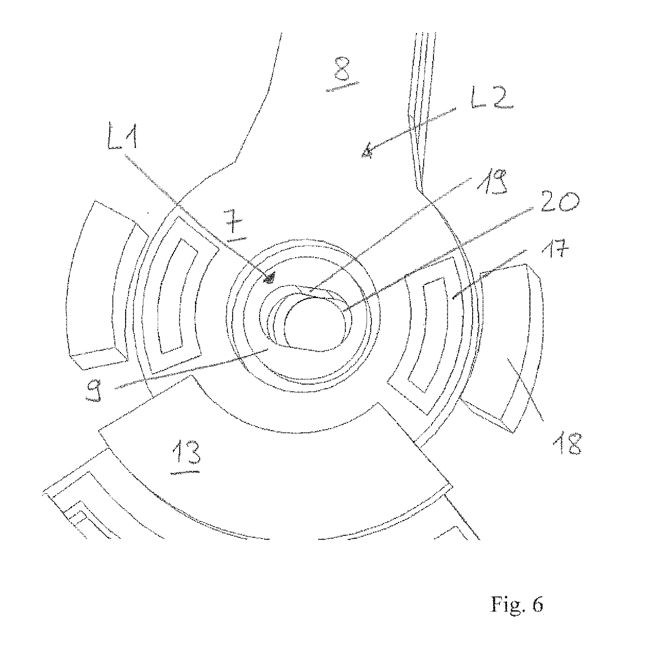

The support part 3 of the first lever L1 comprises a supporting bush, which has a certain clearance in a direction parallel to the tracking direction X. The supporting bush is constituted as an oval shaped hollow cylinder 19 and has a round collar 20 at the top, shown in figure 6. The longer sides of the oval of the hollow cylinder 19 are oriented in a direction parallel to the tracking direction X and provide the above mentioned clearance. The collar 20 is in contact with the pivot pin, not shown, arranged within the collar 20, being turnable around the pivot pin, pivot axis P1, and being tiltable around the third pivot axis P3, which extends lengthwise through the first lever L1. As a result, the first lever L1 with the objective lens 2 is turnable around this third pivot axis P3 due to the special supporting bush with the hollow cylinder 19 and the collar 20.

The coils 10, 11, 17 of the second lever L2 and the magnet configuration with the magnets 13, 14, 18 on the carrier C, together referred to as a magnetic driving portion, initiate the movements of the actuator means, namely the objective lens 2 on the outer end of the pickup arm 4 of the first lever L1. In particular, the movements are initiated by the second lever L2, transmitting moving forces to the pickup arm 4 of the first lever L1.

As a preferred embodiment, the second lever L2, in particular the coil arm 6 and the centre part 7, are constituted as printed circuit boards with several layers of printed coils, in particular with 2, 4 or 6 coil layers. Preferably, printed circuit boards with 4 or 6 coil layers are chosen.

A disk drive unit with an actuator means according to the invention can be used in particular for miniaturised optical disks, e.g. so-called coin-disks.

## Claims

1. An actuator means with a swivel arm arrangement (A) for accessing moving storage media (D) carrying substantially parallel information tracks (T),
the actuator means having a carrier (C) and the swivel arm arrangement (A) being pivotably mounted on the carrier (C) and being turnable parallel to the media (D),
the swivel arm arrangement (A)
having a pickup unit with an objective lens (2) being movable in a tracking direction (X) and in a focus direction (Y),
having a first lever (L1) and a second lever (L2), the first lever (L1) having a support part (3) and a pickup arm (4) carrying the objective lens (2), wherein the support part (3) is pivotably mounted on the carrier (C) for the movement of the objective lens (2), and wherein the pickup arm (4) is movable, with reference to the support part (3), in the focus direction (Y) and in the tracking direction (X), **characterized in that** the second lever (L2) is provided with at least two tilt coils (17), and that the carrier (C) is provided with two tilt magnets (18), for providing a tilt movement.

2. The actuator means according to claim 1,
wherein the pickup arm (4) is flexible in the focus direction (Y).

3. The actuator means according to claim 1 or 2, wherein the first lever (L1) is made by a plastic element with a diminution (5), and wherein the diminution (5) extends parallel to the tracking direction (X) and constitutes a second pivot axis (L2) for the movement of the pickup arm (4) in the focus direction (Y).

4. The actuator means according to one of the claims 1 to 3,
wherein the second lever (L2) is arranged below the first lever (L1), wherein the second lever (L2) comprises a coil arm (6) and a support arm (8), the support arm (8) being connected to the pickup arm (4), and wherein the coil arm (6) carries a tracking coil (10) and a focus coil (11).

5. The actuator means according to one of the claims 1 to 4,
wherein the support part (3) comprises a supporting bush, which has a certain clearance in the tracking direction (X).

6. The actuator means according to one of the preceding claims, wherein the second lever (L2) comprises a centre part (7) between the coil arm (6) and the support arm (8), and wherein the centre part (7) carries the tilt coils (17) for providing a magnetic field in parallel with the first pivot axis (P1).

7. The actuator means according to claim 6, wherein the second lever (L2) is a printed circuit board, and wherein the tilt coils (17) are printed coils being arranged at both the top side and the bottom side of the centre part (7).

8. The actuator means according to claim 6 or 7, wherein each coil (17) is located in one of the outer regions of the centre part (7) between the coil arm (6) and the support arm (8), at opposite sides with regard to the first pivot axis (P1), and in a direction parallel to the second pivot axis (P2) for providing a tilt movement around a third pivot axis (P3), which crosses the first pivot axis (P1) under an essentially rectangular angle.

9. The actuator means according to claim 6, 7 or 8, wherein the two tilt magnets (18) face the outer regions of the centre part (7) with the tilt coils (17) each on opposite sides.

10. The actuator means according to one of the claims 6 - 9,
wherein the two tilt magnets (18) have a shape of an arc and each extend in parallel with the centre part (7), and
wherein the magnetic field of the two tilt magnets (18) is oriented essentially in parallel with the second pivot axis (P2).

11. Disk drive unit comprising an actuator means according to one of the claims 1 to 10.
